# EUROPÄISCHE PATENTSCHRIFT

(11) **EP 2 711 267 B1**
(45) Veröffentlichungstag und Bekanntmachung des Hinweises auf die Patenterteilung: **08.07.2015**
(21) Anmeldenummer: 13184338.5
(22) Anmeldetag: 13.09.2013
(51) Int. Cl.: B62D 3/12

(54) **Vorrichtung zum Positionieren und Befestigen eines Lenkgetriebes an einem Kraftfahrzeugaufbau**
Device for positioning and fixing of a steering gear on a motor vehicle body
Dispositif de positionnement et de fixation d'un mécanisme de direction à une structure de véhicule automobile

(30) Priorität: 20.09.2012 DE 102012018559
(43) Veröffentlichungstag der Anmeldung: 26.03.2014
(73) Patentinhaber: AUDI AG, 85045 Ingolstadt (DE)
(72) Erfinder: Mohrlock, Dominik, 85053 Ingolstadt (DE); Kater, Torsten, 85080 Gaimersheim (DE)

(56) Entgegenhaltungen:
- JP-A- H1 178 915
- JP-A- 2004 168 234
- JP-A- 2010 253 990

## Beschreibung

Die Erfindung betrifft eine Vorrichtung zum Positionieren und Befestigen eines Lenkgetriebes an einem Kraftfahrzeugaufbau gemäß dem Patentanspruch 1.

Normalerweise werden Lenkgetriebe in Kraftfahrzeughochrichtung (z-Richtung) am Kraftfahrzeugaufbau verschraubt. Die z-Position an den Anbindungspunkten von Lenkgetrieben bzw. allgemein die z-Position von Spurstangen sind sehr empfindlich, so dass hier sehr kleine Toleranzen realisiert werden müssen. Darüber hinaus sind Lenkgetriebe relativ ungenau im Spurstangenpunkt, da sich durch die vielen Teile in einem Lenkgetriebe viele Toleranzen addieren. Somit ist eine Positionierung des Lenkgetriebes über die Verschraubungspunkte relativ ungenau und erfordert zudem eine genaue Bearbeitung der Anschraubpunkte am Hilfsrahmen.

Aus der DE 10 2006 048 946 A1 ist eine Hilfsrahmenanordnung bekannt, die eine in Fahrzeuglängsrichtung (x-Richtung) ausgerichtete Verschraubung des Lenkgetriebes am Hilfsrahmen ermöglicht.

Eine gattungsgemäße, sämtliche Merkmale des Oberbegriffs des Patentanspruches 1 aufweisende Vorrichtung zur Positionierung und Befestigung eines Lenkgetriebes an einem Kraftfahrzeugaufbau ist der Offenbarung der JP 2004-168234 A und der JP H1178915 A zu entnehmen.

Der Erfindung liegt die Aufgabe zugrunde, eine Vorrichtung zur Positionierung und Befestigung eines Lenkgetriebes an einem Kraftfahrzeugaufbau vorzuschlagen, die eine einfache, passgenaue Befestigung des Lenkgetriebes ermöglicht.

Diese Aufgabe wird durch den Patentanspruch 1 gelöst.

Die Unteransprüche 2 bis 5 stellen vorteilhafte Weiterbildungen der Erfindung dar.

Gemäß der Erfindung umfasst die Vorrichtung zur Positionierung und Befestigung eines Lenkgetriebes an einem Kraftfahrzeugaufbau einen am Kraftfahrzeugaufbau gelagerten Hilfsrahmen, mindestens zwei Justierstifte, die mit dem Hilfsrahmen derart verbindbar sind, dass im montierten Zustand die Justierstifte in Kraftfahrzeuglängsrichtung (x-Richtung) ausgerichtet sind, sowie mehrere in Kraftfahrzeuglängsrichtung (x-Richtung) ausgerichtete Schraubverbindungen, über die das Lenkgetriebe mit dem Hilfsrahmen befestigbar ist. Zudem sind am Lenkgetriebe den Justierstiften zugeordnete Kontaktflächen ausgebildet, über die die Position des Lenkgetriebes in Kraftfahrzeughochrichtung (z-Richtung) und Kraftfahrzeugquerrichtung (y-Richtung) festgelegt ist.

Um die Toleranzkette möglichst klein zu halten, sind die Kontaktflächen an den in Kraftfahrzeugquerrichtung betrachtet gegenüberliegenden Spurstangen-Lagerkonsolen angeordnet.

Aufgrund der vorgesehenen, in Kraftfahrzeuglängsrichtung ausgerichteten Justierstifte und den am Lenkgetriebe angeordneten, den Justierstiften zugeordneten Kontaktflächen, ist bei der Montage des Lenkgetriebes auf eine einfache Art und Weise eine genaue Positionierung des Lenkgetriebes in Kraftfahrzeughoch- und Kraftfahrzeugquerrichtung ermöglicht. Dies erweist sich als besonders vorteilhaft, da - wie bereits ausgeführt, die Achskinematik insbesondere an den Spurstangen in z-Richtung sehr empfindlich ist - und über die Justierstifte in z-Richtung eine exakte Positionierung gewährleistet ist. Da zudem die Verschraubung in Fahrzeuglängsrichtung (x-Richtung) erfolgt, ist eine mechanische Bearbeitung der Anschraubfläche am Hilfsrahmen nicht mehr erforderlich. Aufgrund der Verschraubung in Kraftfahrzeuglängsrichtung ist zudem gewährleistet, dass Toleranzen im Lenkgetriebe nur in Kraftfahrzeugquerrichtung (y-Richtung) zum Tragen kommen, d.h. die im Hinblick auf die Achskinematik schädlichen Toleranzen in z-Richtung des Lenkgetriebes und Lochspiele werden umgangen.

Gemäß einer besonders verteilhaften Ausführungsform der Erfindung sind die Justierstifte mittels einer Steckverbindung mit dem Hilfsrahmen lösbar verbunden. Das Vorsehen einer Steckverbindung erweist sich als besonders vorteilhaft, da hierdurch eine einfache und schnelle Montage der Justierstifte gewährleistet ist.

Vorzugsweise sind für die Ausbildung der Steckverbindung am Hilfsrahmen Stecklöcher ausgebildet, in die die Justierstifte einsteckbar sind. Das Vorsehen von Stecklöchern im Hilfsrahmen hat den positiven Effekt, dass diese einfach und kostengünstig durch ein einfaches Lochen herstellbar sind.

Um nach der Montage des Lenkgetriebes ein einfaches Entfernen der Justierstifte zu gewährleisten, sind die Justierstifte vorzugsweise gestuft ausgebildet.

Vorzugsweise ist eine der Kontaktflächen als eine ebene Fläche oder in Form eines Langloches ausgebildet, während die andere Kontaktfläche beispielsweise halbschalenförmig oder kreisrund ausgebildet ist.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden anhand des in der Zeichnung dargestellten Ausführungsbeispiels näher beschrieben.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine Gesamtansicht eines am Hilfsrahmen befestigten Lenkgetriebes;
- Fig. 2: eine vergrößerte Darstellung der linken Gabel des Lenkgetriebes aus Fig. 1, und
- Fig. 3: eine vergrößerte Darstellung der rechten Gabel des Lenkgetriebes aus Fig. 1.

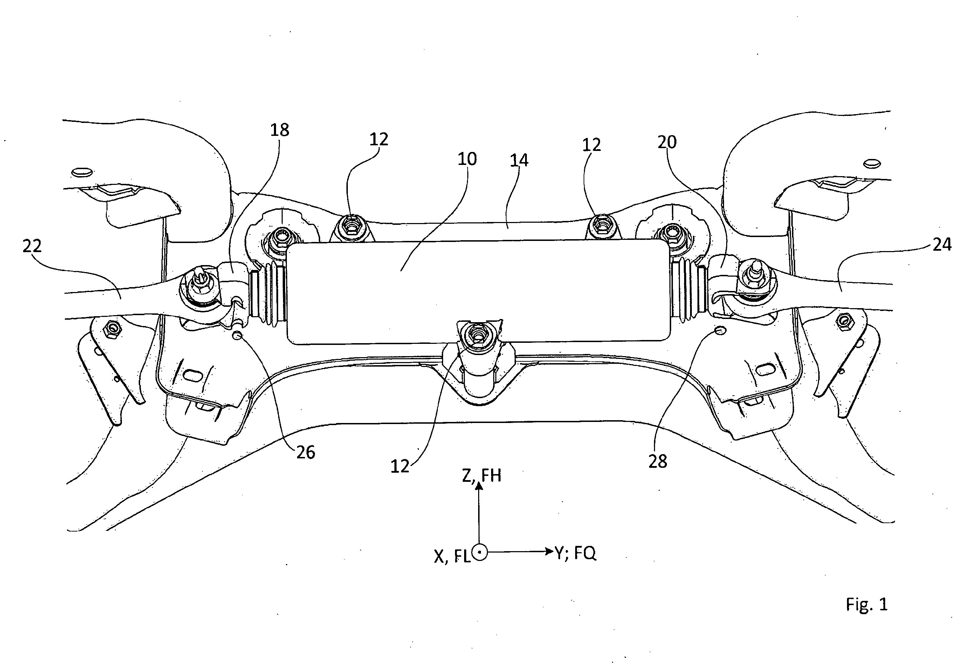

Fig. 1 zeigt ein Lenkgetriebe 10, dass über mehrere in Fahrzeuglängsrichtung FL (x-Richtung) ausgerichtet Schraubverbindungen 12 an einem Hilfsrahmen 14 befestigt ist. Der Hilfsrahmen 14 ist seinerseits über mehrere Verschraubungen am Kraftfahrzeugaufbau befestigt.

In Kraftfahrzeugquerrichtung FQ (y-Richtung) betrachtet weist das Lenkgetriebe 10 Spurstangen-Lagerkonsolen 18, 20 auf, über die das Lenkgetriebe 10 mit den Spurstangen 22, 24 verbunden ist. Zudem ist, wie Fig. 1 zu entnehmen ist, der Hilfsrahmen 14 im Bereich der Spurstangen-Lagerkonsolen 18, 20 jeweils mit einem Absteckloch 26, 28 versehen. Die Abstecklöcher 26, 28 dienen jeweils der Aufnahme eines, hier aus Gründen der Übersichtlichkeit nicht dargestellten, Justierstiftes, die im aufgesteckten Zustand in Kraftfahrzeuglängsrichtung FL zeigend vom Hilfsrahmen 14 abstehen.

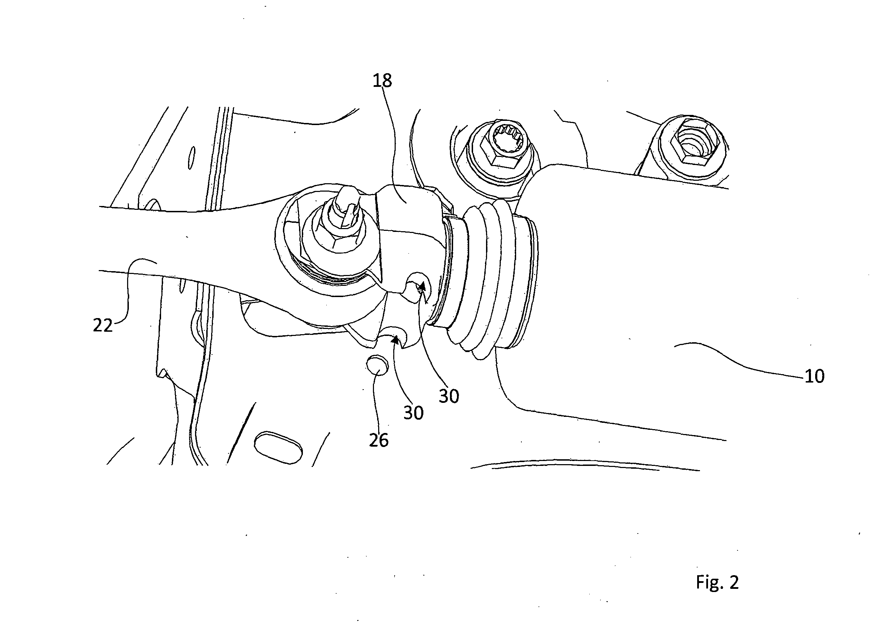

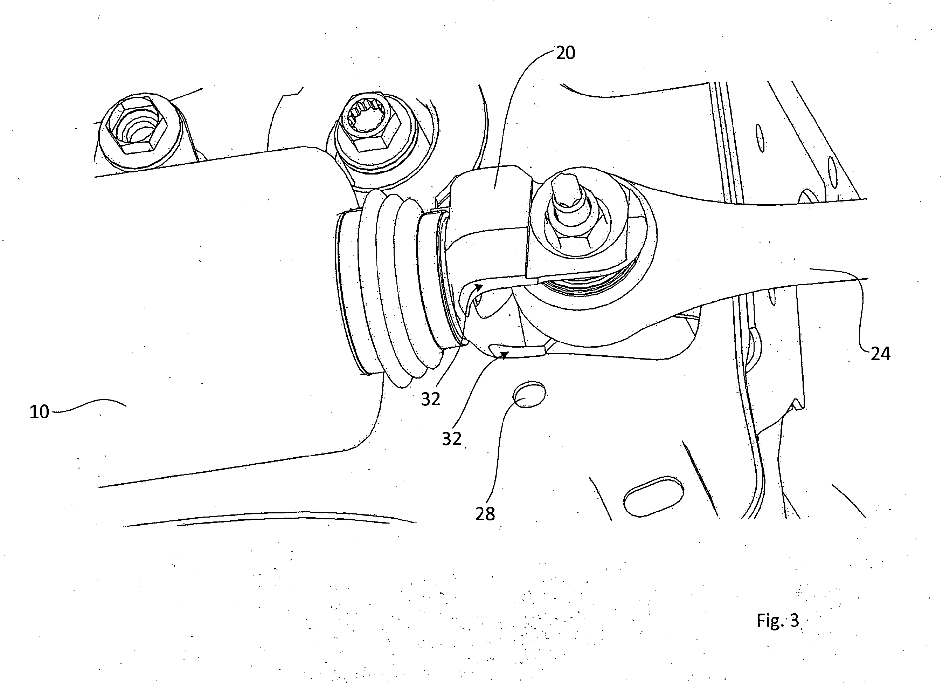

Wie insbesondere Fig. 2 und Fig. 3 zu entnehmen ist, sind an den Spurstangen-Lagerkonsolen 18, 20 entsprechende, den Justierstifte zugeordnete Kontaktflächen 30, 32 ausgebildet:
Während an der linken Spurstangen-Lagerkonsole 18 die Kontaktfläche 30 halbschalenförmig ausgebildet ist, vgl. Fig. 2, ist die Kontaktfläche 32 der rechten Spurstangen-Lagerkonsole 20 als eine ebene Fläche ausgebildet, vgl. Fig. 3.

Die Funktion der Abstecklöcher 26, 28 sowie den zugeordneten Kontaktflächen 30, 32 an den Spurstangen-Lagerkonsolen 22, 24 ist folgende:
Für die Montage des Lenkgetriebes 10 am Hilfsrahmen 14 werden zunächst die - hier aus Gründen der Übersichtlichkeit nicht dargestellten Justierstifte - in die Abstecklöcher 26, 28 eingesteckt.

Über die an den Spurstangen-Lagerkonsolen 18, 20 augebildeten Kontaktflächen 30, 32 ist nunmehr eine genaue Positionierung des Lenkgetriebes 10 sowohl in Kraftfahrzeughochrichtung FH (z-Richtung) als auch in Kraftfahrzeugquerrichtung FQ (y-Richtung) sichergestellt.

Nach erfolgter Verschraubung des Lenkgetriebes 10 am Hilfsrahmen 14 werden die Justierstifte wieder entfernt.

### Bezugszeichenliste

- 10: Lenkgetriebe
- 12: Schraubverbindung
- 14: Hilfsrahmen
- 18: Spurstangen-Lagerkonsolen
- 20: Spurstangen-Lagerkonsolen
- 22: Spurstangen
- 24: Spurstange
- 26: Steckloch
- 28: Steckloch
- 30: Kontaktfläche
- 32: Kontaktfläche

- FH: Kraftfahrzeughochrichtung
- FL: Kraftfahrzeuglängsrichtung
- FQ: Kraftfahrzeugquerrichtung

## Patentansprüche

1. Vorrichtung zur Positionierung und Befestigung eines Lenkgetriebes (10) an einem Kraftfahrzeugaufbau, umfassend
- einen am Kraftfahrzeugaufbau gelagerten Hilfsrahmen (14);
- mehrere in Kraftfahrzeuglängsrichtung (FL) ausgerichtete Schraubverbindungen (12), über die das Lenkgetriebe (10) mit dem Hilfsrahmen (14) befestigbar ist,
dadurch gekenntzeichnet, dass mindestens zwei Justierstifte vorgesehen sind, die mit dem Hilfsrahmen (14) derart lösbar verbindbar sind, dass im montierten Zustand die Justierstifte in Kraftfahrzeuglängsrichtung (FL) ausgerichtet sind, wobei am Lenkgetriebe (10) den Justierstiften zugeordnete Kontaktflächen (30, 32) ausgebildet sind, über die die Position des Lenkgetriebes (10) in Kraftfahrzeughochrichtung (FH) und Kraftfahrzeugquerrichtung (FQ) festgelegt ist, wobei die Kontaktflächen (30, 32) an in Kraftfahrzeugquerrichtung (FQ) betrachtet gegenüberliegenden Spurstangen-Lagerkonsolen (18, 20) angeordnet sind.

2. Vorrichtung zur Positionierung und Befestigung eines Lenkgetriebes (10) an einem Kraftfahrzeugaufbau nach Anspruch 1, **dadurch gekennzeichnet, dass** die Justierstifte mittels einer Steckverbindung mit dem Hilfsrahmen (14) lösbar verbindbar sind.

3. Vorrichtung zur Positionierung und Befestigung eines Lenkgetriebes (10) an einem Kraftfahrzeugaufbau nach Anspruch 2, **dadurch gekennzeichnet, dass** der Hilfsrahmen (14) Abstecklöcher (26, 28) aufweist, in die die Justierstifte einsteckbar sind.

4. Vorrichtung zur Positionierung und Befestigung eines Lenkgetriebes (10) an einem Kraftfahrzeugaufbau nach einem der vorgenannten Ansprüche, **dadurch gekennzeichnet, dass** die Justierstifte gestuft ausgebildet sind.

5. Vorrichtung zur Positionierung und Befestigung eines Lenkgetriebes (10) an einem Kraftfahrzeugaufbau nach einem der vorgenannten Ansprüche, **dadurch gekennzeichnet, dass** eine der Kontaktflächen (30, 32) als ebene Fläche oder in Form eines Langloches und die andere Kontaktfläche (30; 32) halbschalenförmig oder kreisrund ausgebildet sind.

## Claims

1. Device for positioning a steering gear (10) on a motor vehicle body and attaching it thereto, comprising
- a subframe (14) mounted on the motor vehicle body;
- a plurality of screw connections (12) oriented in the motor vehicle longitudinal direction (FL), by means of which the steering gear (10) can be attached to the subframe (14),
**characterised in that** at least two adjusting pins are provided and can be releasably connected to the subframe (14) in such a way that, in the assembled state, the adjusting pins are oriented in the motor vehicle longitudinal direction (FL), contact surfaces (30, 32) assigned to the adjusting pins being formed on the steering gear (10) and being used to determine the position of the steering gear (10) in the motor vehicle vertical direction (FH) and the motor vehicle transverse direction (FQ), the contact surfaces (30, 32) being arranged on track rod mounting brackets (18, 20) which are opposite one another when viewed in the motor vehicle transverse direction (FQ).

2. Device according to claim 1 for positioning a steering gear (10) on a motor vehicle body and attaching it thereto, **characterised in that** the adjusting pins can be releasably connected to the subframe (14) by means of a plug connection.

3. Device according to claim 2 for positioning a steering gear (10) on a motor vehicle body and attaching it thereto, **characterised in that** the subframe (14) comprises positioning holes (26, 28) into which the adjusting pins can be inserted.

4. Device according to any of the preceding claims for positioning a steering gear (10) on a motor vehicle body and attaching it thereto, **characterised in that** the adjusting pins are stepped pins.

5. Device according to any of the preceding claims for positioning a steering gear (10) on a motor vehicle body and attaching it thereto, **characterised in that** one of the contact surfaces (30, 32) is formed as either a flat face or an elongate hole, and the other contact surface (30, 32) is half-shell-shaped or circular.

## Revendications

1. Dispositif de positionnement et de fixation d'un mécanisme de direction (10) sur une carrosserie de véhicule automobile, comprenant :
- un châssis auxiliaire (14) monté sur la carrosserie du véhicule automobile ;
- plusieurs assemblages par vis (12) dirigés dans la direction longitudinale du véhicule automobile (FL), via lesquels assemblages le mécanisme de direction (10) peut être fixé au châssis auxiliaire (14),
**caractérisé en ce qu'**il est prévu au moins deux broches de réglage qui peuvent être raccordées au châssis auxiliaire (14) de manière amovible de façon qu'à l'état monté, les broches de réglage soient dirigées dans la direction longitudinale du véhicule automobile (FL), dans lequel le mécanisme de direction (10) présente des surfaces de contact (30, 32) affectées aux broches de réglage, via lesquelles la position du mécanisme de direction (10) est fixée dans la direction en hauteur du véhicule automobile (FH) et dans la direction transversale du véhicule automobile (FQ), dans lequel les surfaces de contact (30, 32) sont aménagées sur des consoles d'appui de barres d'accouplement (18, 20) opposées par rapport à la direction transversale du véhicule automobile (FQ).

2. Dispositif de positionnement et de fixation d'un mécanisme de direction (10) sur une carrosserie de véhicule automobile selon la revendication 1, **caractérisé en ce que** les broches de réglage peuvent être raccordées de manière amovible par enfichage avec le châssis auxiliaire (14).

3. Dispositif de positionnement et de fixation d'un mécanisme de direction (10) sur une carrosserie de véhicule automobile selon la revendication 2, **caractérisé en ce que** le châssis auxiliaire (14) présente des trous d'alignement (26, 28) dans lesquels peuvent être enfichées les broches de réglage.

4. Dispositif de positionnement et de fixation d'un mécanisme de direction (10) sur une carrosserie de véhicule automobile selon l'une quelconque des revendications précédentes, **caractérisé en ce que** les broches de réglage sont formées de manière étagée.

5. Dispositif de positionnement et de fixation d'un mécanisme de direction (10) sur une carrosserie de véhicule automobile selon l'une quelconque des revendications précédentes, **caractérisé en ce que** l'une des surfaces de contact (30, 32) se présente sous la forme d'une surface plane ou sous la forme d'un trou longitudinal et l'autre surface de contact (30, 32) sous forme de semi-coque ou sous forme circulaire.
